Europäisches Patentamt

(19) European Patent Office

Office européen des brevets

(11) Numéro de publication: **0 203 860**
**B1**

(12) **FASCICULE DE BREVET EUROPEEN**

(45) Date de publication du fascicule du brevet:
**17.11.88**

(21) Numéro de dépôt: **86401096.2**

(22) Date de dépôt: **23.05.86**

(51) Int. Cl.⁴: **G 21 C 19/30, B 01 D 13/00**

(54) **Circuit d'ultrafiltration du fluide primaire de refroidissement d'un réacteur nucléaire à eau sous pression.**

(30) Priorité: **29.05.85 FR 8508053**

(43) Date de publication de la demande:
**03.12.86 Bulletin 86/49**

(45) Mention de la délivrance du brevet:
**17.11.88 Bulletin 88/46**

(84) Etats contractants désignés:
**BE CH DE GB IT LI SE**

(56) Documents cités:
**FR - A - 2 552 419**

(73) Titulaire: **FRAMATOME, Tour Fiat 1 place de la Coupole, F-92400 Courbevoie (FR)**

(72) Inventeur: **Dagard, Philippe, 20 avenue de l'Europe, F-78160 Marly Le Roi (FR)**
Inventeur: **Riviere, Jacques, 2 allée Ile Marante, F-92700 Colombes (FR)**

(74) Mandataire: **Polus, Camille et al, c/o Cabinet Lavoix 2, Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention concerne en particulier un circuit d'ultrafiltration du fluide primaire de refroidisisement d'un réacteur nucléaire à eau sous pression.

De tels réacteurs comportent un circuit primaire dans lequel circule l'eau sous pression de refroidissement des assemblages combustibles du coeur du réacteur. Le circuit primaire est en communication avec le volume interne de la cuve du réacteur renfermant le coeur et comporte des pompes de circulation du fluide primaire, des générateurs de vapeur et un pressuriseur reliés par des canalisations de grand diamètre et résistant à la pression. L'ensemble du circuit primaire est placé à l'intérieur d'une enceinte de sécurité constituant une des structures de protection du réacteur nucléaire. Sur le circuit primaire, sont branchés en dérivation des circuits auxiliaires qui sont disposés soit dans leur totalité, soit partiellement, à l'intérieur de l'enceinte de sécurité.

En particulier, pour garder constantes la quantité et la qualité chimique du fluide primaire, on utilise un circuit appelé circuit de contrôle volumétrique et chimique qui permet de prélever une partie du fluide en circulation dans le circuit primaire, d'effectuer divers traitements sur ce fluide primaire et de réintroduire, dans le circuit primaire, des quantités de fluide déterminées ayant des caractéristiques chimiques bien définies. Le circuit de contrôle volumétrique et chimique placé en dérivation sur le circuit primaire comporte une branche de décharge et une branche de charge traversant l'une et l'autre la paroi de l'enceinte de sécurité pour être reliées, à l'extérieur de cette enceinte, à divers dispositifs d'épuration et de traitement du fluide primaire. Ces traitements sont réalisés sur un fluide à basse température et à basse pression, des dispositifs de refroidissement et de dépressurisation étant placés sur la branche de décharge du circuit en amont des unités de traitement. Le fluide primaire est dépressurisé et partiellement refroidi avant sa sortie de l'enceinte de sécurité ce qui limite les risques inhérents à la présence de fluide primaire sous pression à l'extérieur de l'enceinte de sécurité.

Sur la branche de charge du circuit de contrôle volumétrique et chimique, sont disposés divers moyens d'injection d'additifs ou d'eau d'appoint ainsi qu'une pompe de charge permettant de réintroduire dans le circuit primaire un fluide à une pression un peu supérieure à la pression dans ce circuit. La branche de charge du circuit de contrôle volumétrique et chimique traverse également le côté secondaire d'un échangeur de chaleur servant au refroidissement du fluide primaire prélevé par la branche de décharge.

Le fluide de refroidissement constitué par l'eau sous pression circule dans le circuit primaire à une température d'environ 300°C, à une pression voisine de 155 × 10⁵ Pa et avec un débit de l'ordre de 25.000 m³/h dans chacune des boucles du circuit. Pendant les différentes phases de fonctionnement du réacteur se traduisant par des montées ou des descentes en puissance, il est nécessaire de modifier les paramètres physiques ou chimiques du réacteur, ce qui est réalisé en particulier grâce au circuit de contrôle volumétrique et chimique.

Pendant sa circulation dans le circuit primaire ou dans les circuits auxiliaires, le fluide de refroidissement vient en contact avec de nombreux composants qui sont pour la plupart réalisés ou revêtus avec un alliage de nickel qui permet de limiter l'attaque par le fluide primaire. Cependant, certains composants comme les sièges de vannes et de robinets ou même certaines portions de tuyauteries connaissent une certaine usure, si bien que le fluide primaire se charge en particules de très petites dimensions arrachées à ces composants. Ces particules sont amenées à circuler avec le fluide primaire et donc à traverser le coeur du réacteur où elles sont soumises à un bombardement neutronique intense qui a pour effet de les activer. En particulier, les alliages résistant à l'usure qui renferment une certaine proportion de cobalt sont la cause de l'apparition de particules fortement activées.

Ces particules s'accumulent dans certaines parties des composants du réacteur, ce qui pose des problèmes très difficiles à résoudre au cours des opérations de maintenance du réacteur, ces opérations nécessitant des phases préalables de décontamination très difficiles à mettre en oeuvre.

D'autres part, l'eau d'appoint et les additifs introduits dans le fluide primaire grâce au circuit de contrôle volumétrique et chimique contiennent également des particules solides d'origines diverses qui sont activées lorsque le fluide primaire traverse le coeur du réacteur.

Il est donc nécessaire de traiter le fluide primaire périodiquement ou en continu pour abaisser la teneur en particules activées ou activables dans ce fluide primaire. Dans le circuit de contrôle volumétrique et chimique, sont disposées des unités de traitement du fluide primaire par des résines échangeuses d'ions de type à lits mélangés mais ces résines ne permettent de retenir que certaines espèces chimiques dissoutes dans le fluide primaire, à l'exclusion des particules de petites dimensions transportées par ce fluide. On associe également à ces unités de traitement des filtres mécaniques sous forme de cartouches filtrantes mais ces filtres ne permettent pas de retenir des particules d'une dimension inférieure à 5 microns alors que la courbe de Gauss représentant la proportion des particules transportées en fonction de leur dimension est centrée au voisinage de 0,5 microns. La solubilité des particules dans le fluide primaire est d'autre part inversement proportionnelle à la température, si bien que les conditions de traitement dans le circuit de contrôle volumétrique et chimique à l'extérieur de l'enceinte de sécurité ne sont pas favorables pour obtenir un piègeage efficace des particules.

On a proposé dans la demande de brevet européen EP-A1-0 145 519 correspondant au brevet FR-A-2 552 419 au nom de FRAMATOME, de réaliser la purification du fluide primaire à une pression et à une température proches de sa température et de sa pression de service, par ultrafiltration grâce à un dispositif placé à l'intérieur de l'enceinte de sécurité du réacteur, par exemple sur la branche de décharge du circuit de contrôle volumétrique et chimique. Le filtrat récupéré à la sortie du filtre est ensuite refroidi et dépressurisé avant d'être envoyé à l'extérieur de l'enceinte de sécurité dans les unités de traitement du circuit de contrôle volumétrique et chimique. Pour éviter le colmatage de la paroi d'ultrafiltration, on maintient le concentrat en circulation au contact de cette paroi pendant le fonctionnement de l'ultrafiltre. Le concentrat se charge donc constamment en impuretés radioactives et il est nécessaire d'effectuer la vidange de la partie primaire du filtre dès que la proportion d'impuretés dans le concentrat devient trop élevée pour que le filtre fonctionne dans de bonnes conditions. Le concentrat doit être évacué vers une installation de traitement d'effluent liquide, ce qui complique les opérations de maintenance de la centrale nucléaire. Cet inconvénient s'ajoute à celui lié à un fonctionnement discontinu du filtre.

Un inconnvénient supplémentaire résulte du fait que le fluide recyclé dans le circuit primaire par la branche de charge du circuit de contrôle volumétrique et chimique contient des particules provenant de l'eau d'appoint ou des additifs qui sont activés lors de leur traversée du coeur. La quantité de particules actives transportées par le fluide primaire reste donc relativement élevée.

Le but de l'invention est donc de proposer un réacteur nucléaire à eau sous pression comportant, à l'intérieur d'une enceinte de sécurité, un circuit primaire en communication avec le volume interne de la cuve du réacteur renfermant un coeur constitué par des assemblages combustibles, dans lequel circule l'eau sous pression constituant le fluide primaire et au moins un circuit auxiliaire en dérivation sur le circuit primaire comportant une branche de décharge sur laquelle sont disposés des moyens de refroidissement et de dépressurisation du fluide primaire prélevé par le circuit auxiliaire, traversant la paroi de l'enceinte de sécurité du réacteur et une branche de charge pour le retour du fluide dans le circuit primaire traversant également la paroi de l'enceinte et, à l'extérieur de l'enceinte, des moyens d'épuration et de traitement du fluide refoidi et dépressurisé et un circuit d'ultrafiltration du fluide primaire de refroidissement, ce circuit d'ultrafiltration permettant d'effectuer une purification efficace du fluide primaire aussi bien par élimination des particules activées dans le coeur que par élimination des particules non actives introduites par le circuit auxiliaire, sans augmentation de la quantité d'effluent radioactif à traiter dans la centrale.

Dans ce but, le circuit d'ultrafiltration selon l'invention comporte, à l'intérieur de l'enceinte de sécurité:

— une première boucle en dérivation sur la branche de décharge du circuit auxiliaire comportant une conduite de prélèvement et d'amenée de fluide, à sa pression et à sa température de service, dans un premier dispositif d'ultrafiltration placé dans la première boucle, une conduite d'évacuation de filtrat en sortie du dispositif d'ultrafiltration et de retour de ce filtrat dans la branche de décharge, en aval du point de prélèvement de fluide par la conduite de prélèvement, une vanne étant intercalée sur la branche de décharge entre les deux conditions ainsi qu'une conduite d'avacuation du concentrat traversant la paroi de l'enceinte et sur laquelle sont placés, à l'intérieur de l'enceinte, des moyens de refroidissement et de dépressurisation du concentrat avant son introduction dans la branche de décharge du circuit auxiliaire, en aval des moyens de refroidissement de de dépressurisation placés sur cette branche de décharge,

— une seconde boucle en dérivation sur la branche de charge du circuit auxiliaire comportant une conduite de prélèvement et d'amenée de fluide à sa température et à sa pression de service, dans un second dispositif d'ultrafiltration placé dans la seconde boucle, une conduite d'évacuation de filtrat en sortie du dispositif d'ultrafiltration et de retour de ce filtrat dans la branche de charge en aval du point de prélèvement, une vanne étant intercalée entre ces deux conduites ainsi qu'une conduite d'évacuation du concentrat reliée à la branche de décharge du circuit auxiliaire à l'intérieur de l'enceinte, en amont des moyens de refroidissement et de dépressurisation placés sur cette branche.

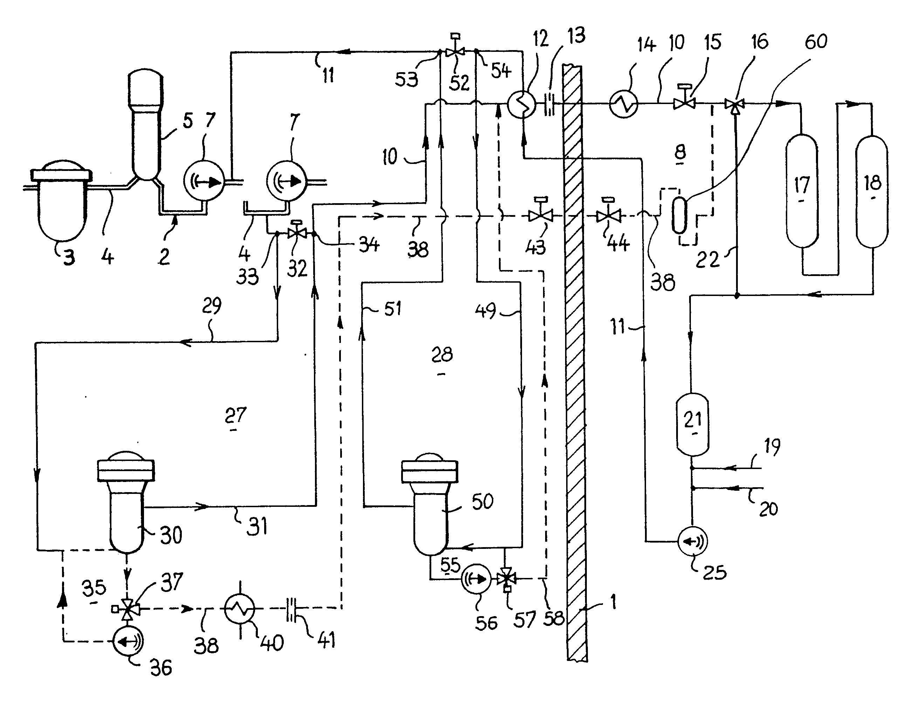

Afin de bien faire comprendre l'invention, on va maintenant décrire, à titre d'exemple non limitatif, en se référant à la figure jointe en annexe, un circuit d'ultrafiltration selon l'invention associé au circuit de contrôle volumétrique et chimique d'un réacteur nucléaire à eau sous pression.

La figure unique représente de façon schématique, les circuits primaires de contrôle volumétrique et chimique et d'ultrafiltration d'un réacteur nucléaire à eau sous pression.

Sur la figure unique, on voit une partie de la paroi 1 de l'enceinte de sécurité du réacteur, les composants situés à l'intérieur de cette enceinte étant placés à gauche de la paroi 1 sur la figure et les composants situés à l'extérieur, à droite de la paroi 1.

A l'intérieur de l'enceinte de sécurité, est placé le circuit primaire désigné de façon générale par le repère 2 et comportant une cuve 3 renfermant le coeur du réacteur et plusieurs boucles constituées par des canalisations 4 en communication avec le volume interne de la cuve 3. Sur chacune des boucles sont disposés un générateur de vapeur 5 et une pompe primaire 7 assurant la circulation du fluide primaire constitué par de l'eau sous pression dans le circuit primaire. Sur la figure, on a représenté partiellement et de façon très schématique deux boucles du circuit primaire entre lesquelles est branché le circuit volumétrique et chimique 8 du réacteur nucléaire. Ce circuit volumétrique et chimique 8 comporte une branche de décharge 10 en communication avec l'une des boucles du réacteur et une branche de charge 11 en communication avec une autre boucle du réacteur. Les branches 10 et 11 du circuit 8 traversent l'une et l'autre la paroi 1 de l'enceinte de sécurité, les dispositifs de traitement du circuit 8 étant placés à l'extérieur de l'enceinte. Sur la branche de décharge 10 sont disposés, avant la traversée de la paroi 1, un dispositif d'échange thermique 12 et un dispositif de dépressurisation 13 constitué par une buse comportant un orifice de détente. Avant sa traversée de la paroi 1 de l'enceinte, le fluide circulant dans la branche 10 est donc prérefroidi et dépressurisé, avant d'entrer dans un second dispositif échangeur de chaleur 14 pour son refroidissement complémentaire. Le fluide primaire circulant dans la branche 10 est à une température de l'ordre de 40° en aval de l'échangeur 14. Une vanne de régulation 15 permet de régler le débit du fluide primaire refroidi et dépressurisé, ce fluide pouvant être dirigé, par l'intermédiaire d'une vanne à trois voies 16 vers différentes unités de traitement du circuit volumétrique et chimique 8. Ces unités de traitement comportent des colonnes échangeuses d'ions 17 et 18 renfermant respectivement des lits de résines mélangées et cationiques, un circuit de borication 19 et un circuit de dilution 20 dont le rôle est respectivement d'introduire de l'acide borique ou de l'eau déminéralisée dans le fluide primaire. Le circuit 8 comporte également un réservoir 21 permettant le stockage et la régulation du fluide primaire dans le circuit 8. La vanne à trois voies 16 et une conduite 22 en dérivation permettent de court-circuiter éventuellement les colonnes d'échange 17 et 18, si le traitement correspondant du fluide primaire n'est pas nécessaire.

Sur la branche de charge 11 du circuit 8 assurant le retour de l'eau sous pression dans le circuit primaire, cette conduite 11 traversant la paroi 1 de l'enceinte de sécurité, est disposée une pompe de charge 25 permettant de remonter la pression de l'eau de refroidissement à un niveau supérieur à la pression de service de cette eau dans le circuit primaire. Sur la branche de charge 11 est également intercalée, à l'intérieur de l'enceinte, la partie secondaire de l'échangeur de chaleur 12 assurant en même temps que le refroidissement de l'eau dans la branche de décharge 10 le réchauffement de l'eau dans la branche de charge 11 jusqu'au voisinage de la température primaire. L'eau de refroidissement sous pression à haute température est ensuite réintroduite dans le circuit primaire 2.

Le circuit d'ultrafiltration suivant l'invention comporte deux boucles 27 et 28, la première boucle 27 étant placée en dérivation sur la branche de décharge 10 du circuit de contrôle volumétrique et chimique 8 et la seconde boucle 28 étant placée en dérivation sur la branche de charge 11 de ce circuit 8. La boucle 27 comporte une conduite 29 de prélèvement d'eau primaire dans la branche de décharge 10 et d'amenée de cette eau à un dispositif d'ultrafiltration 30, d'un côté de sa paroi d'ultrafiltration constituée par un ensemble de tubes verticaux en métal fritté recouverts d'une couche de filtration en céramique, cette paroi d'ultrafiltration étant inerte vis-à-vis du fluide primaire. Cet ultrafiltre peut être par exemple du type décrit dans la demande de brevet EPA 1-0 145 519 de la Société FRAMATOME ou d'un type nouveau décrit dans une demande de brevet déposée le même jour que la présente demande. La boucle 27 comporte de plus une conduite 31 d'évacuation du filtrat à la sortie de l'ultrafiltre 30 en communication avec la partie de cet ultrafiltre située de l'autre côté de la paroi d'ultrafiltration par rapport à la partie dans laquelle débouche la conduite 29. La conduite 31 est reliée à la branche de décharge 10 du circuit 8 en un point situé en aval du point de jonction entre cette branche 10 et la conduite de prélèvement 29, si l'on considère le sens de circulation normal du fluide dans la branche de décharge 10. Entre le point de prélèvement 33 et le point de retour 34 du fluide primaire dans la branche de décharge est disposée une vanne 32 permettant de faire passer le fluide dans la boucle d'ultrafiltration 27.

Le concentrat restant dans la partie du fluide située du côté de l'arrivée du fluide est mis en circulation grâce à une pompe 36, dans un circuit 35 comportant une partie de la conduite 29 d'amenée du fluide à purifier. Cette circulation du concentrat permet d'éviter le colmatage de la paroi d'ultrafiltration dans le filtre 30. Sur le circuit 35 est disposée, à la sortie de concentrat du filtre 30, une vanne à trois voies réglable 37 dont la troisième voie constituant un embranchement sur le circuit 35 est reliée à une conduite 38 d'évacuation du concentrat. Sur cette conduite 38 sont placés un échangeur de chaleur 40 permettant de refroidir le concentrat et un dispositif de dépressurisation 41. La conduite d'évacuation du concentrat 38 traverse la paroi 1 et débouche dans la branche 10 du circuit 8, en aval de la vanne de régulation 15. De part et d'autre de la paroi 1, les vannes de sectionnement 43 et 44 permettent d'isoler la conduite 38 sur laquelle est disposé à l'extérieur de l'enceinte un épurateur 60 constitué par des échangeurs d'ions à lits mélangés.

La seconde boucle 28 du circuit d'ultrafiltration comporte une conduite 49 de prélèvement et d'amenée du fluide primaire dans un ultrafiltre 50 dont la structure est identique à la structure du filtre 30 de la boucle 27. Le filtrat en sortie de l'ultrafiltre 50 est récupéré par une conduite d'évacuation et de retour 51. La conduite 49 est reliée à la branche de charge 11 du circuit 8 en un point de prélèvement 54 et la conduite de retour 51, en un point de retour 53 disposé en aval du point de prélèvement 54, sur la branche 11, si l'on considère le sens normal de circulation du fluide primaire dans cette branche de charge 11. Une vanne 52 est placée entre les points 53 et 54 sur la branche 11 et permet de faire passer le fluide dans la boucle d'ultrafiltration 28.

Le concentrat circule à l'intérieur d'un circuit 55 grâce à une pompe 56 qui assure son passage sur la paroi d'ultrafiltration avec une vitesse suffisante pour éviter tout colmatage de cette paroi. Le circuit 55 comporte une partie de la conduite 49 d'amenée de fluide primaire. Une vanne à trois voies 57 réglable permet de prélever une partie du concentrat au niveau d'un embranchement du circuit 55, dans une conduite 58 d'évacuation du concentrat débouchant dans la branche 10 de décharge du circuit de contrôle volumétrique et chimique 8, en amont de l'échangeur de chaleur 12 et du dispositif de dépressurisation 13.

Le fonctionnement du dispositif est le suivant:

Pendant le fonctionnement du réacteur nucléaire, le fluide de refroidissement étant en circulation dans le circuit primaire, en actionnant la vanne 32, on fait passer un débit de 20 m³/h environ dans la boucle 27 du circuit d'ultrafiltration. Le fluide prélevé a une pression de l'ordre de $155 \cdot 10^5$ Pa correspondant à la pression dans le circuit primaire en amont de la pompe 7. Le débit de fluide primaire prélevé traverse l'ultrafiltre et subit une perte de charge de l'ordre de $5 \cdot 10^5$ Pa. On récupère un débit de filtrat de l'ordre de 19,5 m³/h à une pression de l'ordre de $150 \cdot 10^5$ Pa. Ce filtrat qui comporte une concentration de particules en suspension très faible est réinjecté dans le circuit 8 au point 34 de la branche de décharge 10 où la pression est réglée grâce à une perte de charge ajustée à une valeur voisine de 150·10⁵ Pa.

Le fluide primaire débarrassé des particules radioactives retenues dans le concentrat travers l'échangeur de chaleur 12 et le dispositif de dépressurisation 13 avant de sortir de l'enceinte pour être à nouveau refroidi par l'échangeur de chaleur 14 puis traité dans les diverses unités du circuit 8 situées à l'extérieur de l'enceinte. On évite ainsi toute contamination de l'échangeur 12 ou du dispositif de dépressurisation 13 à forte capacité par des particules radioactives.

La vanne à trois voies réglable 37 est réglée de façon qu'un soutirage en continu du concentrait ait lieu concurremment à la circulation de ce concentrat dans le circuit 35, par la canalisation d'évacuation du concentrat 38, avec un débit d'environ 0,5 m³/h.

Le concentrat évacué qui présente une concentration relativement forte de particules radioactives est refroidi jusqu'à la température ambiante et dépressurisé jusqu'à la pression atmosphérique par l'échangeur 40 et le dispositif de dépressurisation 41, à l'intérieur de l'enceinte de sécurité. Le faible débit de concentrat à basse température et à une pression proche de la pression atmosphérique est mélangé après épuration dans le filtre 60 au débit important de fluide primaire de la branche de décharge 10 du circuit de contrôle volumétrique et chimique puis envoyé dans les unités de traitement de ce circuit 8 sous une forme très diluée. On évite ainsi de contaminer l'échangeur de chaleur à grand débit 12 et le dispositif de dépressurisation 13 de la branche de décharge principale du circuit 8, la réinjection de concentrat étant effectuée en aval de ces éléments. On substitue donc à une contamination des éléments à grand débit 12 et 13 la contamination des éléments à très faible débit 40 et 41 sur la conduite d'évacuation du concentrat.

Le fluide primaire désactivé et traité de façon classique dans le circuit de contrôle volumétrique et chimique est recomprimé grâce à la pompe de charge 25 jusqu'à une pression de l'ordre de 177·10⁵ Pa. Après réchauffement jusqu'à environ 300° dans l'échangeur 12, ce fluide est prélevé en 54 par la conduite 49 de la boucle 28, avec un débit de 20 m³/h par la vanne 52. Ce débit traverse l'ultrafiltre 50 dans lequel il subit une perte de charge de 5·10⁵ Pa. La pression du filtrat en sortie dans la canalisation 51 est donc encore très largement supérieure à la pression de fonctionnement du primaire, soit 155·10⁵ Pa et la réintroduction du fluide primaire peut avoir lieu en 53.

Le concentrat en circulation dans le circuit 55 est à une pression de l'ordre de 175·10⁵ Pa et ce concentrat évacué par la conduite 58 peut être facilement réintroduit dans le circuit 8 dont la pression au point de réintroduction est voisine de 145·10⁵ Pa. D'autre part, le faible débit du concentrat évacué par la conduite d'évacuation 58 par rapport au débit circulant dans la branche de décharge 10 permet aux pressions de s'égaliser très facilement.

Le filtrat réintroduit par la conduite 51 dans la branche de charge 11 et dans le circuit primaire renferme une très faible quantité de particules si bien qu'il se produit dans le coeur du réacteur une très faible réactivation du fluide primaire. Les particules retenues dans le concentrat sont des particules non actives puisqu'elles proviennent du fluide primaire ayant traversé les unités de traitement du circuit de contrôle volumétrique et chimique. Ces particules contenues dans le concentrat peuvent donc être réintroduites sans inconvénient dans le fluide primaire en amont de l'échangeur de chaleur 12 et du dispositif de dépressurisation 13 à grand débit.

Dans les conditions décrites ci-dessus, l'efficacité de l'ultrafiltration est telle que la teneur en particules actives et non actives, dans le filtrat prélevé en sortie des ultrafiltres 30 et 50 respectivement est pratiquement nulle pour des tailles de particules supérieures à 0,01 micron. Il en résulte une contamination pratiquement nulle de l'échangeur 12 et du dispositif de dépressurisation 13 à grand débit, de même qu'une réactivation pratiquement nulle du fluide primaire réintroduit par le circuit de contrôle volumétrique et chimique.

Pour augmenter l'efficacité de la décontamination dans des proportions notables de l'ordre de 20 à 30%, il serait nécessaire de traiter des débits beaucoup plus importants de l'ordre de 100 m³/h dans la boucle 27 ou boucle d'ultrafiltration active. Pour celà on prélève le fluide en plaçant la boucle 27 en dérivation sur le circuit primaire de part et d'autre d'une pompe primaire 7. Dans ce mode de réalisation, on peut considérer que la branche de décharge du circuit de contrôle comporte une partie de la boucle du circuit primaire au voisinage de la pompe 7, la boucle d'ultrafiltration active 27 étant mise en dérivation sur cette partie de la branche de décharge du circuit de contrôle.

Dans ce cas, le traitement à grand débit augmente évidemment le débit du concentrat à évacuer, ce débit étant de l'ordre de 2,5 m³/h. Cependant un tel débit peut être facilement accepté et traité dans le circuit de contrôle volumétrique et chimique.

On voit que les principaux avantages du circuit d'ultrafiltration suivant l'invention sont d'éviter une contamination des éléments du circuit de contrôle volumétrique et chimique fonctionnant à grand débit et d'éviter une réactivation de particules non actives réintroduites par le circuit de contrôle volumétrique et chimique. Le dispositif d'ultrafiltration suivant l'invention a ainsi à la fois un rôle curatif et un rôle préventif contre la contamination des composants du réacteur nucléaire.

Il est bien évident que l'invention ne se limite pas au mode de réalisation; c'est ainsi qu'on peut uliliser aussi bien dans la boucle active 27 que dans la boucle inactive 28, des ultrafiltres d'un type différent des ultrafiltres à parois tubulaires tels que décrits.

On peut également imaginer l'utilisation de dispositifs de régulation différents des vannes qui ont été décrites. On peut imaginer également d'autres formes pour les boucles d'ultrafiltration et d'autres modes de branchement sur le circuit de contrôle volumétrique et chimique ou sur un autre circuit auxiliaire d'un réacteur nucléaire à eau sous pression.


**Revendications**

1. Réacteur nucléaire à eau sous pression comportant, à l'intérieur d'une enceinte de sécurité (1), un circuit primaire (2) en communication avec le volume interne de la cuve (3) du réacteur renfermant un coeur constitué par des assemblages combustibles, dans lequel circule l'eau sous pression constituant le fluide primaire et au moins un circuit auxiliaire (8) en dérivation sur le circuit primaire (2) comportant une branche de décharge (10) sur laquelle sont disposés des moyens de refroidissement (12) et de dépressurisation (13) du fluide primaire prélevé par le circuit auxiliaire (8), traversant la paroi (1) de l'enceinte de sécurité et une branche de charge (11) pour le retour du fluide dans le circuit primaire (2) traversant également la paroi (1) de l'enceinte et, à l'extérieur de l'enceinte, des moyens d'épuration et de traitement (17, 18, 19, 20) du fluide refroidi et dépressurisé et un circuit d'ultrafiltration du fluide primaire de refroidissement, caractérisé en ce que le circuit d'ultrafiltration du fluide primaire de refroidissement comporte, à l'intérieur de l'enceinte de sécurité:

— une première boucle (27) en dérivation sur la branche de décharge (10) du circuit auxiliaire (8) comportant une conduite (29) de prélèvement et d'amenée de fluide à sa pression et à sa température de service dans un premier dispositif d'ultrafiltration (30) placé dans la première boucle (27), une conduite d'évacuation de filtrat (31) en sortie du dispositif d'ultrafiltration (30) et de retour de ce filtrat dans la branche de décharge (10), en aval du point de prélèvement (33) de fluide par la conduite de prélèvement (29), une vanne (32) étant intercalée sur la branche de décharge (10) entre les deux conduites (29, 31) ainsi qu'une conduite d'évacuation (38) du concentrat traversant la paroi (1) de l'enceinte et sur laquelle sont placés, à l'intérieur de l'enceinte, des moyens de refroidissement et de dépressurisation (40, 41) du concentrat, avant son introduction dans la branche de décharge (10) du circuit auxiliaire (8), en aval des moyens de refroidissement (12) et de dépressurisation (13) placés sur cette branche de décharge (10),

— une seconde boucle (28) en dérivation sur la branche de charge (11) du circuit auxiliaire (8) comportant une conduite (49) de prélèvement et d'amenée de fluide à sa température et à sa pression de service, dans un second dispositif d'ultrafiltration (50) placé dans la seconde boucle (28), une conduite d'évacuation de filtrat (51) en sortie du dispositif d'ultrafiltration (50) et de retour de ce filtrat dans la branche de charge (11) en aval du point de prélèvement (54), une vanne (52) étant intercalée entre ces deux conduites (49, 51) ainsi qu'une conduite (58) d'évacuation du concentrat reliée à la branche de décharge (10) du circuit auxiliaire (8), à l'intérieur de l'enceinte, en amont des moyens de refroidissement (12) et de dépressurisation (13) placés sur cette branche (10).

2. Réacteur nucléaire suivant la revendication 1, caractérisé par le fait qu'un filtre (60) d'épuration du concentrat est disposé sur la conduite d'évacuation (38), à l'extérieur de l'enceinte de sécurité (1).

3. Réacteur nucléaire suivant la revendication 2, caractérisé par le fait que le filtre (60) est un filtre à résines échangeuses d'ions à lits mélangés.

4. Réacteur nucléaire suivant l'une quelconque des revendications 1, 2 et 3, caractérisé par le fait que la branche (10) de décharge du circuit auxiliaire (8) comporte une partie du circuit primaire (2) incluant une pompe primaire (7) et que la première boucle (27) du circuit d'ultrafiltration est placée en dérivation par rapport à la pompe primaire (7).

5. Réacteur nucléaire suivant l'une quelconque des revendications 1, 2, 3 et 4, caractérisé par le fait que le concentrat retenu par le dispositif d'ultrafiltration (30, 50) est mis en circulation dans un circuit (35, 55) comportant une partie de la conduite de prélèvement et d'amenée (29, 49), par une pompe de circulation (36, 56).

6. Réacteur nucléaire suivant la revendication 5, caractérisé par le fait que la conduite d'évacuation du concentrat (38, 58) constitue un embranchement par rapport au circuit de circulation du concentrat (35, 55) un dispositif de régulation (37, 57) permettant de prélever une partie du concentrat en circulation dans le circuit (35, 55) par la conduite d'évacuation (38, 58).

8. Réacteur nucléaire suivant la revendication 6, caractérisé par le fait que le dispositif de régulation (37, 57) est une vanne à trois voies réglable.

## Patentansprüche

1. Druckwasserkernreaktor, der im Inneren eines Sicherheitsbehälters (1) aufweist:

— einen Primärkreislauf (2), der mit dem Innenvolumen des Reaktordruckbehälters (3) steht und einen Reaktorkern umschliesst, der aus Brennelementkassetten besteht und in dem Druckwasser zirkuliert, das das Primärfluid bildet und mit mindestens einem Hilfskreislauf im Nebenschluss zum Hauptkreislauf (2) und der einer Ablassleitung (10) aufweist, an der Kühlorgane (12) und Druckminderer (13) für das durch den Hilfskreislauf (8) entnommene Primärfluid vorgesehen sind, wobei die Ablassleitung die Wandung (1) des Sicherheitsbehälters durchquert und eine Zuführleitung (11) für die Rückführung des Fluids in Primärkreislauf (2), die ebenfalls die Wandung (1) des Behälters durchquert, und

— ausserhalb des Behälters Reinigungs- und Behandlungsorgane (17, 18, 19, 20) für das abgekühlte und entspannte Fluid, und

— einen Ultrafiltrationskreislauf für das Primärkühlmittel, dadurch gekennzeichnet, dass der Ultrafiltrationskreislauf für das Primärkühlmittel im Inneren des Sicherheitsbehälters aufweist:

— eine erste Schleife (27) im Nebenschluss zur Abfuhrleitung (10) des Hilfskreislaufes (8), mit einer Leitung (29) zur Entnahme von Fluid, das in einer ersten Ultrafiltrationsvorrichtung (30), die in der ersten Schleife (27) angeordnet ist, auf seinen Betriebsdruck und seine Betriebstemperatur gebracht wird, mit einer Leitung zur Abfuhr des Filtrats (31) zum Ausgang der Ultrafiltrationsvorrichtung (30) und zur Rückführung dieses Filtrats in die Ablassleitung (10) stromab bezüglich der Entnahmestelle (33) des Fluids durch die Entnahmeleitung (29), wobei ein Ventil (32) in der Ablassleitung (10) zwischen den beiden Leitungen (29, 31) geschaltet ist und nur eine Ablassleitung (38) für das Konzentrat, die die Wandung (1) des Behälters durchquert, vorgesehen ist und auf der im Inneren des Behälters Organe zur Kühlung und Entspannung (40, 41) des Konzentrats vor dessen Einführung in die Ablassleitung (10) des Hilfskreises (8) stromab bezüglich der Kühlorgane (12) und Entspannungsorgane (13), die auf dieser Ablassleitung (10) angeordnet sind, vorgesehen ist, und

— eine zweite Schleife (28) im Nebenschluss zu der Zufuhrleitung (11) des Hilfskreislaufs (8) mit einer Entnahmeleitung (49), die das Fluid bei seiner Betriebstemperatur und auf Betriebsdruck in eine zweite Ultrafiltrationsvorrichtung (50) führt, die in der zweiten Schleife (28) angeordnet ist, mit einer Ablassleitung für das Filtrat (51) zum Ausgang der Ultrafiltrationsvorrichtung (50) und zur Rückfuhr des Filtrats in die Zufuhrleitung (11) stromab der Entnahmestelle (54), wobei ein Ventil (52) zwischen den beiden Leitungen (49, 50) geschaltet ist und mit einer Ablassleitung (58) für das Konzentrat, die mit der Ablassleitung (10) des Hilfskreislaufs (8) im Inneren des Behälters stromauf bezüglich der Kühlorgane (12) und der Entspannungsorgane (13) angeordnet ist, die in diesen Zweig (10) angeordnet sind.

2. Kernreaktor nach Anspruch 1, dadurch gekennzeichnet, dass ein Reinigungsfilter (60) für das Konzentrat in der Ablassleitung (38) ausserhalb des Sicherheitsbehälters (1) angeordnet ist.

3. Kernreaktor nach Anspruch 2, dadurch gekennzeichnet, dass der Filter (60) ein Filter mit Ionentauscherharzen in gemischten Filterbetten ist.

4. Kernreaktor nach einem der Ansprüche 1, 2 und 3, dadurch gekennzeichnet, dass die Ablassleitung des Hilfskreislaufs (8) einen Teil des Primärkreislaufs (2) einschliesslich einer Primärpumpe (7) umfasst und dadurch, dass die erste Schleife (27) des Ultrafiltrationskreislaufs im Nebenschluss bezüglich zur Primärpumpe (7) angeordnet ist.

5. Kernreaktor nach einem der Ansprüche 1, 2, 3 und 4, dadurch gekennzeichnet, dass das durch die Ultrafiltrationsvorrichtung (30, 50) zurückgehaltene Konzentrat in einen Kreislauf (35, 55) durch eine Umwälzpumpe (36, 56) in einen Kreislauf (35, 55), der ein Teil der Entnahme- und Zufuhrleitung (29, 49) aufweist, in Zirkulation versetzt wird.

6. Kernreaktor nach Anspruch 5, dadurch gekennzeichnet, dass die Entnahmeleitung für das Konzentrat (38, 58) eine Abzweigung bezüglich des Umwälzkreises (35, 55) bildet und eine Regelvorrichtung (37, 57), die es ermöglicht einen Teil des Konzentrats, das in der Leitung (35, 55) zirkuliert, über die Ablassleitung (38, 58) zu entnehmen.

7. Kernreaktor nach Anspruch 6, dadurch gekennzeichnet, dass die Regelvorrichtung (37, 57) ein 3-Wege-Regelventil ist.

## Claims

1. A pressurized water nuclear reactor incorporating, inside a containment shell (1), a primary circuit (2) which communicates with the inner volume of the reactor vessel (3) containing a core consisting of fuel assemblies and in which the pressurized water constituting the primary fluid circulates, and at least one auxiliary circuit (8) taken off from the primary circuit (2) and comprising a discharge branch (10), on which are arranged means of cooling (12) and depressurizing (13) the primary fluid extracted by means of the auxiliary circuit (8) and which passes through the wall (1) of the containment shell, and a charge branch (11) for returning the fluid into the primary circuit (2) which also passes through the wall (1) of the containment, and, outside the containment, means (17, 18, 19, 20) of purifying and treating the cooled and depressurized fluid, and an ultrafiltration circuit for the primary cooling fluid, characterized in that the ultrafiltration circuit comprises, inside the containment shell:

— a first loop (27) taken off from the discharge branch (10) of the auxiliary circuit (8) and incorporating a pipe (29) for extracting and conveying fluid at its operating pressure and temperature into a first ultrafiltration device (30) located in the first loop (27), a pipe (31) for discharging filtrate at the outlet of the ultrafiltration device (30) and for returning this filtrate into the discharge branch (10) downstream of the point (33) where fluid is extracted by means of the extraction pipe (29), a valve (32) being inserted in the discharge branch (10) between the two pipes (29, 31) and a concentrate discharge pipe (38) which passes through the wall (1) of the containment and on which are arranged, inside the containment, means (40, 41) of cooling and depressurizing the concentrate before it is introduced into the discharge branch (10) of the auxiliary circuit (8) downstream of the cooling and depressurizing means (12, 13) arranged on this discharge branch (10),

— a second loop (28) taken off from the charge branch (11) of the auxiliary circuit (8) and incorporating a pipe (49) for extracting and conveying fluid at its operating temperature and pressure into a second ultrafiltration device (50) located in the second loop (28), a pipe (51) for discharging the filtrate at the outlet of the ultrafiltration device (50) and for returning the filtrate into the charge branche (11) downstream of the extracting point (54), a valve (52) being inserted between these two pipes (49, 51), and a concentrate discharge pipe (58) connected to the discharge branch (10) of the auxiliary circuit (8), inside the containment, upstream of the cooling and depressurizing means (12, 13) arranged on this branch (10).

2. A nuclear reactor according to Claim 1, characterized in that a concentrate purification filter (60) is arranged on the discharge pipe (38) outside the containment shell (1).

3. A nuclear reactor according to Claim 2, characterized in that the filter (60) is a filter with mixed-bed ion-exchanger resins.

4. A nuclear reactor according to any of Claims 1, 2 and 3, characterized in that the discharge branch (10) of the auxiliary circuit (8) incorporates a part of the primary circuit (2) which includes a primary pump (7), the first loop (27) of the ultrafiltration circuit being taken off from the primary pump (7).

5. A nuclear reactor according to any of Claims 1, 2, 3 and 4, characterized in that the concentrate retained by the ultrafiltration device (30, 50) is made to circulate by means of a circulating pump (36, 56) in a circuit (35, 55) incorporating part of the extraction and supply pipe (29, 49).

6. A nuclear reactor according to Claim 5, characterized in that the concentrate discharge pipe (38, 58) forms a link to the concentrate circulation circuit (35, 55), and a regulating device (37, 57) makes it possible to extract some of the concentrate circulating in the circuit (35, 55) via the discharge pipe (38, 58).

7. A nuclear reactor according to Claim 6, characterized in that the regulating device (37, 57) is an adjustable three-way valve.

0 203 860